(19) Europäisches Patentamt
European Patent Office
Office européen des brevets

(11) Publication number: **0 154 323**
**A2**

(12) # EUROPEAN PATENT APPLICATION

(21) Application number: 85102429.9

(22) Date of filing: 05.03.85

(51) Int. Cl.⁴: **G 01 N 27/56**
**G 01 N 33/48**

(30) Priority: 05.03.84 US 586255

(43) Date of publication of application:
11.09.85 Bulletin 85/37

(84) Designated Contracting States:
CH DE FR GB IT LI NL SE

(71) Applicant: Orion Research Incorporated
840 Memorial Drive
Cambridge, MA 02139(US)

(72) Inventor: Avdeef, Alex
258 Commonwealth Avenue
Boston, MA 02116(US)

(74) Representative: Endlich, Fritz, Dipl.-Phys.
Postfach 1326
D-8034 Germering(DE)

(54) Analytic instrument.

(57) An analytic instrument for measuring the concentration of substances in solution defines a Gran function relating the potential measured by an ion specific electrode to the concentration of the substance in the solution. The function is defined by the actual measured potentials, together with the reaction type designated by the user. Means are provided to create, alter, and ultimately store a group of predefined analysis methods incorporating different analysis techniques and analysis parameters to thereby accumulate a series of analytic methods individually adapted to the user and providing the optimum analytic method for the particular substances measured by that user.

FIG. I

EP 0 154 323 A2

## BACKGROUND OF THE INVENTION

### A. Field of the Invention

The invention relates to analytic instruments and, more particularly, comprises an analytic instrument for measuring the concentration of selected substances in solution.

### B. Prior Art

Determinations of the concentration of various substances in solution are frequently made in various fields. For example, in medicine, it is often desirable to determine the concentration of various substances in the blood or other body fluids of patients. In industrial chemistry, the concentration of substances in solution is frequently required both to control the composition of a solution as well as to monitor the progress of reactions taking place. Environmental monitoring is another area in which determinations of concentration are required, e.g., in order to control or identify the discharge of contaminants in ground water, rivers, lakes, etc.

One popular method for determining concentration is the use of titration techniques in which controlled amounts of known substances are added to a solution and the resultant mixture is monitored to detect the point at which selected characteristics of the resultant solution undergo a marked change. Such a change, for example, may be manifested by a change in color of the resultant solution; by the formation of a visible precipitate; or by other phenomena. One highly sensitive technique that finds frequent use in determining concentrations to relatively high accuracy comprises monitoring the potential generated in an electrode immersed in the solution and responsive to selected ions in the solution. The electrode is termed "ion specific electrode", and it provides an output voltage that is a function of the concentration of a selected species in the solution. The behavior of the electrode output is monitored as a function of the titrant in order to determine the "equivalence point", that is, the point at which a stoichiometric relation exists between the added substance (titrant) and the substance being analyzed (analate). The concentration of the analate in solution is then determined directly from the measured equivalence point.

The use of ion specific electrodes to determine the equivalence point is common, since this technique offers good accuracy and repeatability. However, this technique does not measure the equivalence point directly, and the equivalence point must thus be calculated from the measured data. This data is highly nonlinear, since the measured potential is logarithmacally related to the desired concentration. Various supplementary techniques have been used to extract the desired information from the measured data, but the accuracy of these techniques has been limited by the nonlinear nature of the data.

An analytic technique for measuring concentration by means of a linear function known as a Gran function is known. See Gran, "Determination of The Equivalence Point in Potentiometric Titrations", The Analyst, volume 77, no. 11 (1952), at pp. 661ff. This technique has been applied in a system constructed at the Lawrence Livermore Laboratory at the University of California: see "Interactive-Experimentation Employing Ion-Selective Electrodes", by Frazer, Kray, Selig and Lim, Analytical Chemistry, vol. 47, no. 6, May 1975, at pp. 669ff. However, the instrument requires significant skill and expertise on the part of the operator, and is not suited for routine analysis by technicians or others with limited chemical and analytic background.

## BRIEF DESCRIPTION OF THE INVENTION

### A. Objects of the Invention

Accordingly, it is an object of the invention to provide an analytic instrument utilizing Gran functions for measuring the concentration of a variety of substances in solution.

Further, it is an object of the invention to provide an analytic instrument for measuring the concentration of substances in solution but which is useable by relatively unskilled operators.

Further, it is an object of the invention to provide an analytic instrument for measuring concentrations in solution in which prior analytic determinations by a user are useable to improve the ease and accuracy of subsequent determinations.

### B. Brief Description of the Invention

In accordance with the present invention, an analytic instrument measures ion concentration of selected substances in solution by measuring the output potential of the electrode during a titration and defining a Gran function, (relating the measured potential to concentration of the selected substance), partly in accordance with the actual measured potential. In particular, the potential measurements determine the sign of an exponent term of the Gran function dependent on whether the electrode potential is decreasing or not. This defines whether one is on a decreasing or an increasing leg of the Gran function. Further, the amplitude of the Gran function is determined by the instrument in accordance with the designation by the user of the particular type of reaction that characterizes the titration being performed. This reaction may be any of a number of known reaction types, e.g., strong acid v. strong base, precipation reaction, etc. Together, the amplitude factor and exponent factor define the Gran function characterizing the analysis in question. Thus, the user need know only the general reaction type and the specific parameters characterizing the analysis in question, namely, the initial volume of the analate and the predetermined slope factor of the specific electrode being used, in order to define the Gran function for the analysis.

Further in accordance with the present invention, provision is made for establishing and saving a number of analytic "methods" defined by the specific parameters of a particular analysis. These parameters include the particular reaction type, the initial volume, the reagent molarity, initial spiking volume, titrant volume increment, maximum volume, end point stopping criteria, and electrode slope characteristic. Once designated by the user, these parameters thereafter define the designated method for subsequent titrations. As the user gains familarity with the titration for the particular substance, these parameters may be changed to define the analysis, and the corresponding method is automatically updated. Thus, the acquired experience of the user in refining his or her analytic technique is inherently stored in the saved method, thereby increasing the proficiency of the user and enhancing the usefulness of the instrument.

## DETAILED DESCRIPTION OF THE INVENTION

The foregoing and other and further objects and features of the invention will be more readily understood from the following detailed description of the invention, when taken in conjunction with the accompanying drawings in which:

Fig. 1 is a sketch of an analytic instrument constructed in accordance with the present invention;

Fig. 2 is a sketch of a typical Gran function plot produced in accordance with the present invention;

Fig. 3 is a chart of appropriate Gran functions for the more common reaction types;

Fig. 4 is a flow chart illustrating the manner in which the appropriate Gran function is defined for a particular analysis in accordance with the present invention; and

Figs. 5 through 8 are flow charts illustrating the adaptive learning characteristics of the present invention.

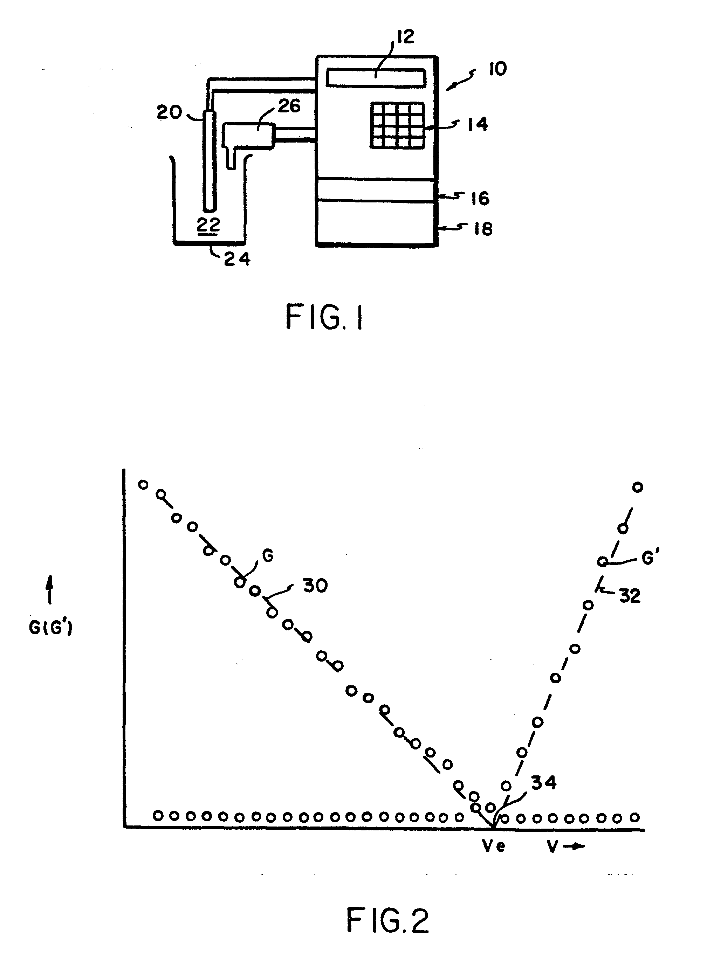

Turning now to Fig. 1, an analytic instrument 10 for titration analyses in accordance with the present invention has a display section 12, a data entry section 14, a computation section 16, and a data storage section 18. The computation section preferably includes a microprocessor (e.g., a Z80 microprocessor) for controlling the instrument operation and performing necessary calculations as described below, as well as non-volatile memory for storing control commands (e.g.,EPROM) and volatile memory for intermediate calculations. The data storage section 18 includes writable non-volatile memory for storing data for long term storage. E.G., it may comprise disc-type storage. The instrument 10 also receives as input a voltage generated by an ion sensitive electrode 20 immersed in a solution 22 in a beaker 24. A reagent dispenser 26 dispenses reagent into the beaker 24 under control of the instrument 10.

Turning now to Fig. 2, a plot of the Gran functions (G, G') versus added reagent volume, V, is shown. The Gran function is shown as demarcated by small circles forming a first downwardly descending Gran function, G, and a correspondingly increasing Gran function, G'. These curves are relatively linear over most of their extent, and are approximated by straight line segments 30, 32, respectively, intersecting at a point 34 corresponding to the "equivalence volume", $V_e$, from which the concentration of the substance in question is directly determined by known methods. (In particular, as is known by those skilled in the art, the concentration of a substance in solution is completely defined in a titration once the initial volume of the substance, the equivalence volume, the volume that of added reagent, and the concentration of the added reagent, are known.).

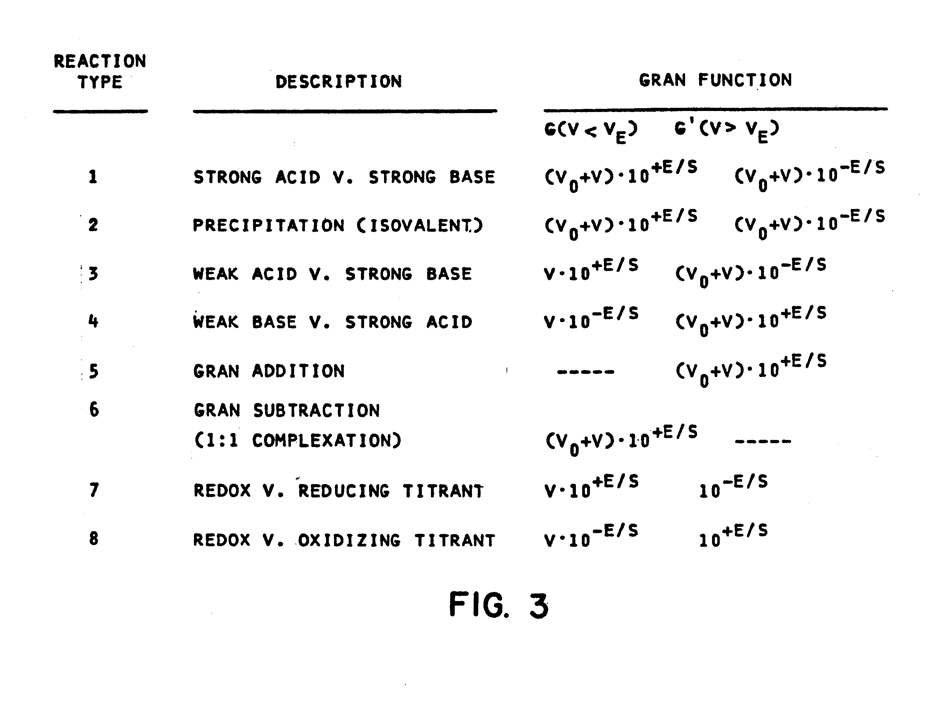

Fig. 3 is a chart showing some of the more common reaction types used in titrations, and the Gran functions corresponding to them, as defined in the present instrument. In Fig. 3, $V_0$ is the initial volume of the analate; V is the volume of the added reagent; E is the actual potential measured by the electrode; and S is the slope of the electrode characteristic. For monovalent ions, this slope is typically of the order of 59.2 milivolts per decade, and one half of that for divalent ions.

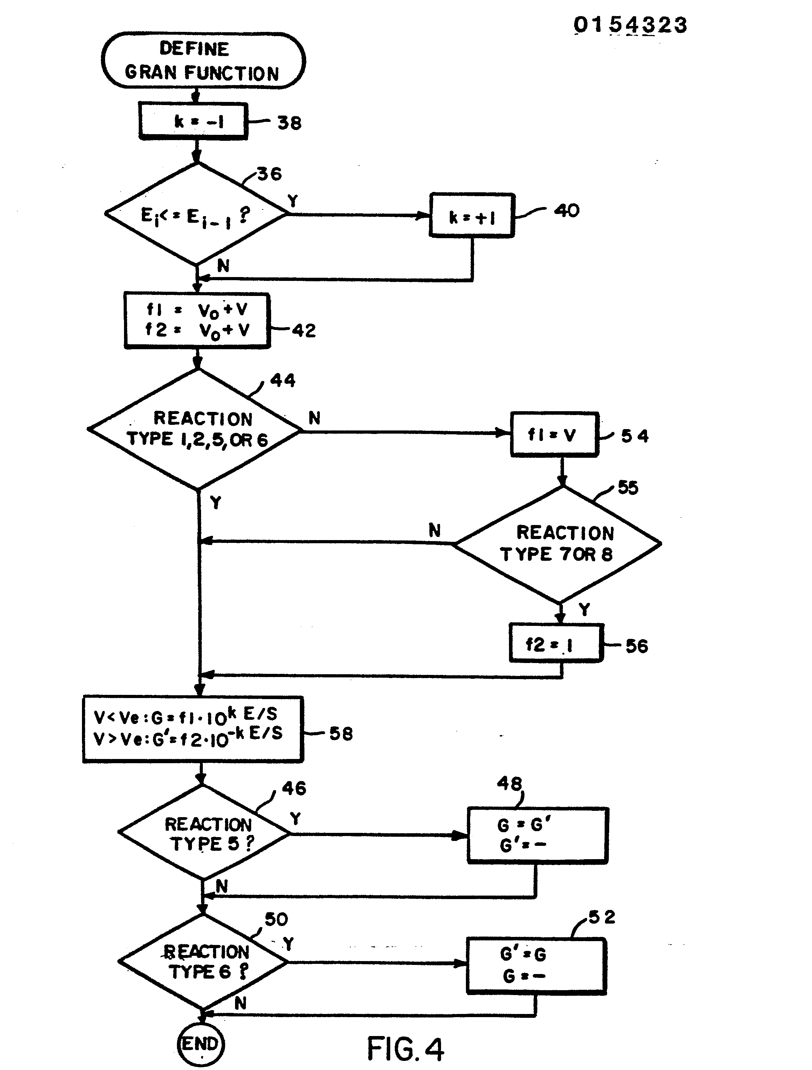

Turning now to Fig. 4, the manner in which the Gran function is actually formed in the instrument is illustrated. In Fig. 4, the sign of the factor (E/S) is designated by the letter k. This sign is negative or positive, dependent (36) on whether successive measurements of the potential E of the electrode show a decreasing characteristic (k = -1) (38) or not (k = +1) (40). In accordance with conventional drawing practice, the triangular box (36) indicates a decision, the nature of the decision being indicated by the notation within the box; the letters "Y" and "N" indicate the subsequent paths which are followed dependent on whether the conditions stated within the box is true (Y) or false (N).

The amplitude of the Gran function (58) is initially defined as f1 for the function G and f2 for the function G'. These are initially defined as both equal to $V_0$ + V (42). For reaction types 1, 2, 5 or 6 (44) (as defined in Fig. 3), these functions remain as originally defined, with the exception that the Gran function G is not defined prior to the equivalence point for reactions of type 5 (46, 48) and the Gran function G' is not described for points beyond the equivalence point for reactions of type 6 (50, 52). For reactions of type 3, 4, 7 or 8, f1 is set to v(54), while for reactions of type 7 or type 8 (55), f2 is set to 1 (56). Thus the Gran function is unequivically specified for each reaction type. The specification being determined in part by the actual voltage measurements.

In a specific physical implementation, in addition to techniques determining the concentration by Gran analysis, additional techniques which may be used to supplement, or in appropriate cases replace, the Gran techniques, are included. For example, three techniques using the Gran functions are of especial interest, namely, Gran analysis using a limited number of points, Gran analysis using all measured points, and a combined Gran and first derivative technique. Additionally, conventional first derivative technique and an end point emf technique have also been included. These techniques are referred to herein simply as technique nos. 1 through 5, respectively. The details of their computation forms no part of the invention except as otherwise expressly described herein. It is sufficient to understand here that in defining a particular analysis run, the user either selects a predefined method stored from prior use or creates a new method by selecting one of the specified calculation techniques and specifying the appropriate parameters in response to prompts from the instrument.

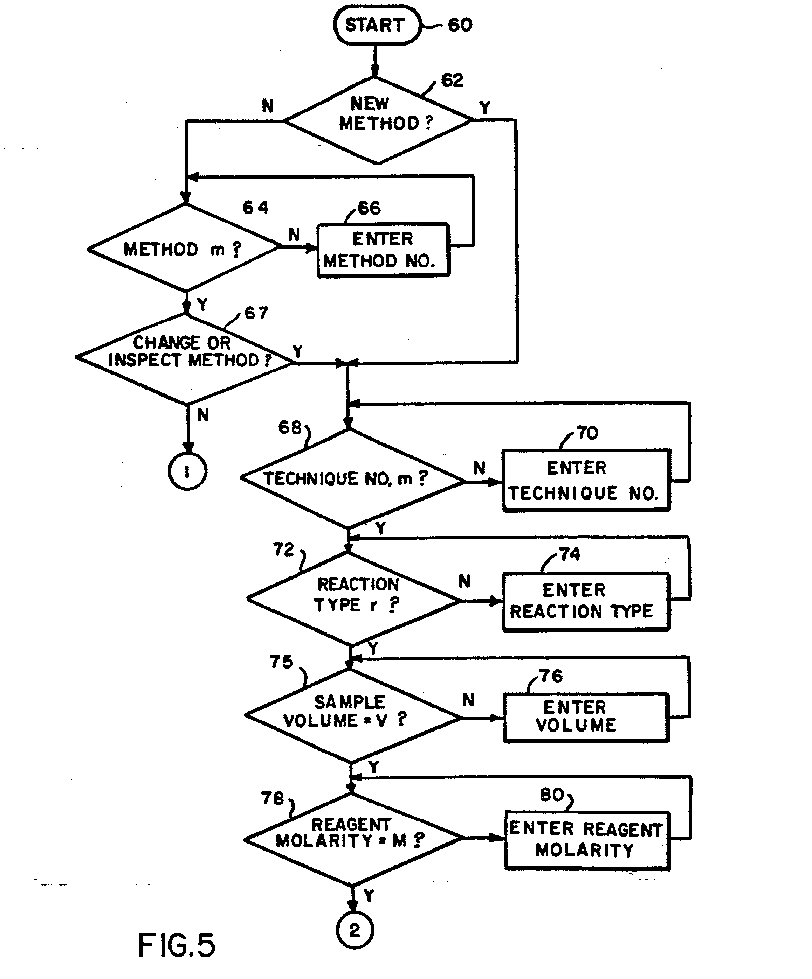

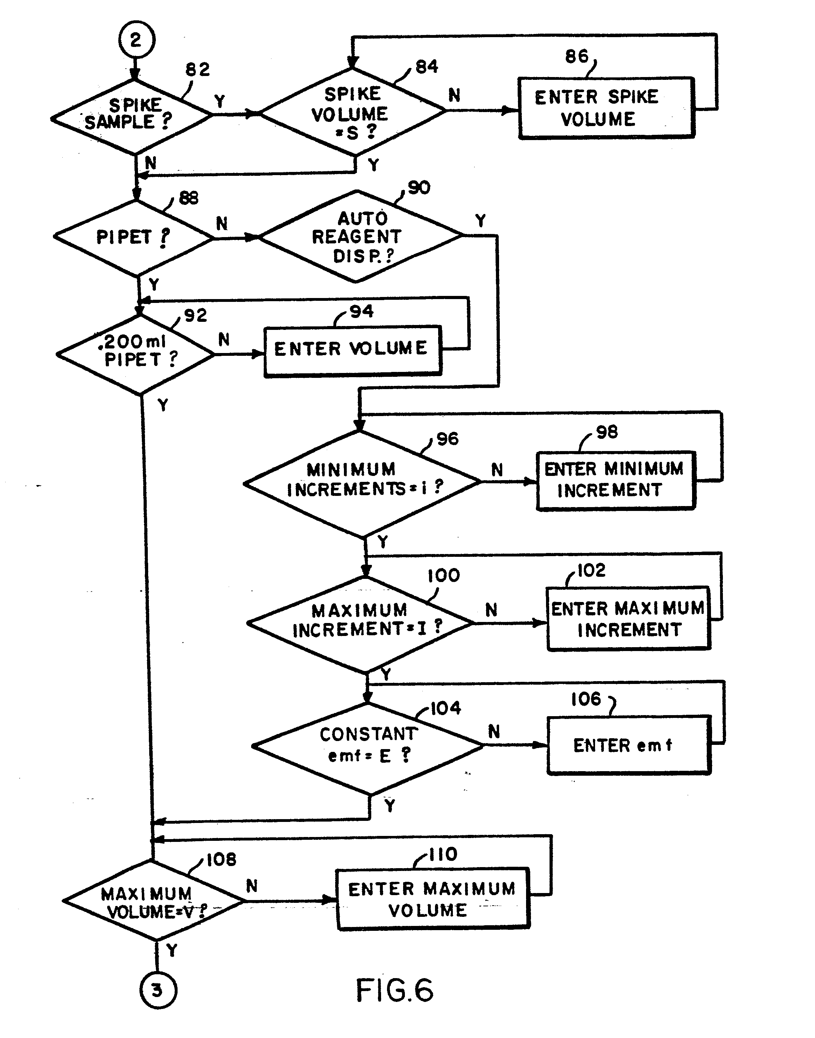

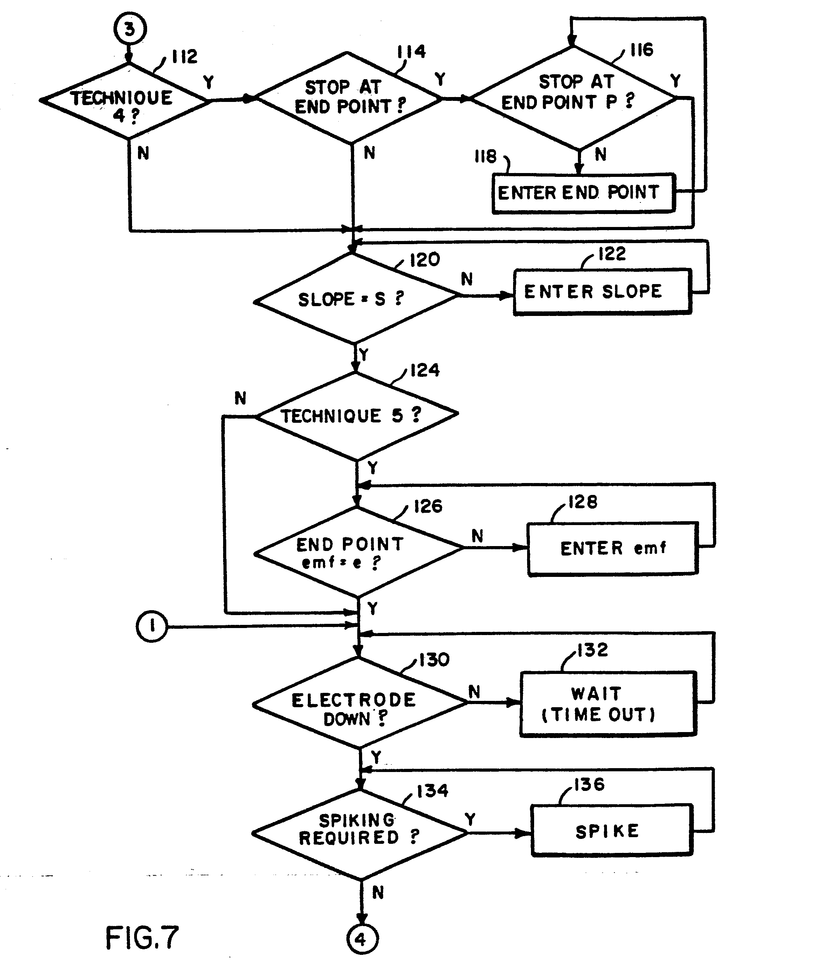

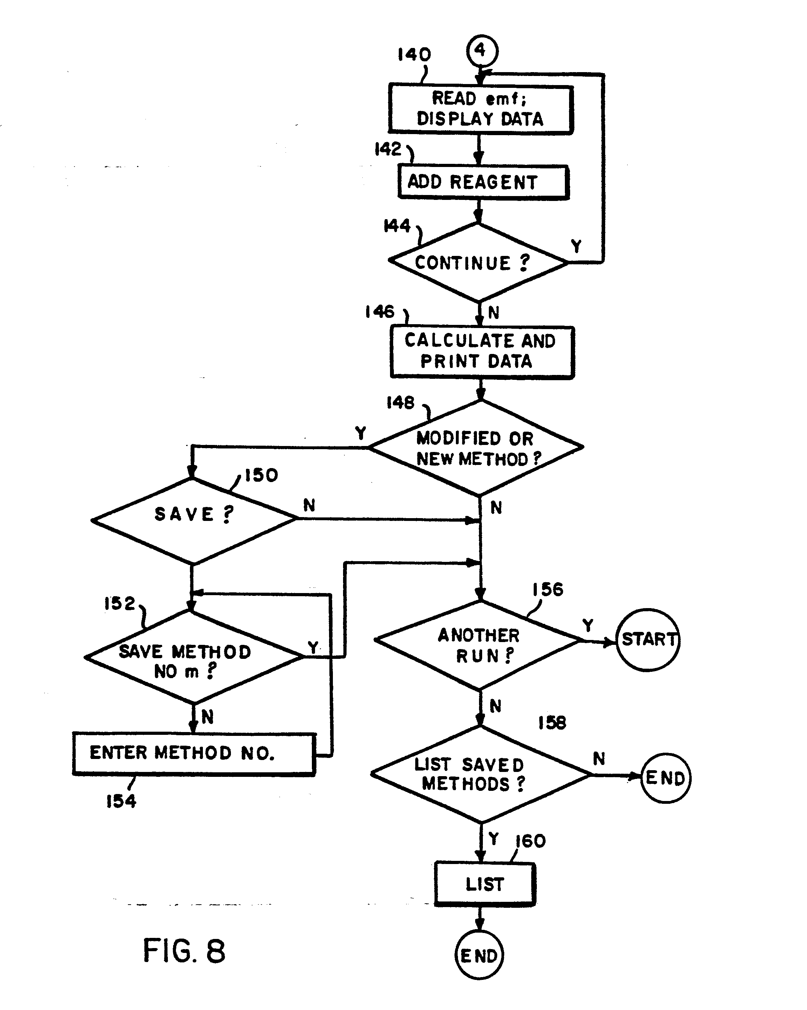

Turning now to Figs. 5 through 8, the adaptive nature of the present system is illustrated. At the start (60) of each analysis, the user is prompted to indicated whether the method to be utilized is a new method (62). This prompt appears in the message display area 12 of the instrument (Fig. 1), and the user responds by entering the response "YES" or "NO" via the data input panel (14). If the user responds that a new method is not to be used, the display panel queries whether method "m" (64) is to be used. Generally, m is the number of the last method that was used. If a different method is to be used, the user enters the method number (66) and this number is then displayed as the selected method. After the user indicates that the displayed method is indeed the one to be utilized (Y), the user is then queried (66) as to whether he or she desires to change or inspect the method. If the answer is no ("N") the further entry of analysis parameters is bypassed, and the instrument proceeds directly to pre-measurement checking (Fig.

7). If, on the other hand, the method is to be inspected or changed, the selected method number is again displayed and the user is queried (68) as to whether this number

is to remain the same. If it is to be changed, the user is prompted (70) to enter the new method number and this number is then displayed. If it is to remain the same, the user responds in the affirmative ("Y"). The user is next prompted (72) for the reaction type number. If the desired reaction type number is not that displayed, the user may enter (74) the desired reaction type number. If it is, the user again responds in the affirmative. A similar procedure is followed with respect to defining the sample volume (74, 76) and the reagent molarity (78, 80).

If initial spiking of the sample is desired, that fact is indicated to the instrument by the user (82), and the desired spiking volume selected (84, 86). A decision between addition of reagent by means of a pipet (88) or by the automatic reagent dispenser (90) is next made. If a pipet is to be used, the user indicates or confirms its volume (92, 94), while, if the automatic reagent dispenser is to be used, the user specifies the minimum (96, 98) and maximum (100, 102) volumes to be dispensed and the mode in which it is to be dispensed. For example, if it is to be dispensed in accordance with constant emf increments, this decision is entered (104, 106) via the data entry panel 14 (Fig. 1).

The maximum volume of reagent to be added is next specified (110, 112). Certain techniques may call for differing methods of determining when to terminate the titration, and thus the data gathering. For example, if a standard first derivative technique is included in addition to the Gran technique, the user may be asked whether he or she wishes to stop at an end point (114) and, if so, to specify the desired endpoint (116, 118). Further, after specifying the slope which characterizes the ion sensitive electrode (120, 122), the user may be asked to specify the desired end point emf if a technique utilizing this is called for the user (124, 126, 128).

At this point, the method has been determined by specifying the calculation techniques, the reaction types, and the appropriate parameters such as volume, molarity, incremental reagent volume, etc. A final prompt to the user queries whether the electrode is "down" (i.e., in the solution) (130) and, if not, waits until it is (132). A time-out function may be incorporated at this stage to prevent the system from waiting indefinitely ("hanging"). Finally, the user is prompted with respect to adding a spiking quantity (134, 136) and the measurement proceeds.

In its data gathering cycle, the instrument reads the electrode potential and displays this potential, together with associated data, on the display 12. The user is allowed to terminate the data gathering (144) when desired. Thereafter, the instrument calculates the concentration from the measured data and the given input parameters and prints the results for the user.

Before terminating the analysis cycle, the instrument indicates whether the method is a modified or new method (148) and, if the user indicates that it is ("Y"), queries whether it is to be saved (150). Provision is made to allow the user to specify the method number under which it is to be saved (152, 154). The analysis may then be repeated (156) or terminated (158). the stored methods may be listed prior to determination.

The instrument described herein offers significant advantages over prior instruments. It makes possible in a commercial instrument an analytic procedure (Gran analysis) heretofore confined essentially to the research laboratory for use by highly skilled personnel. With repeated use, even an otherwise totally inexperienced user will rapidly build up a catalogue of analytic methods (comprising specification of calculation techniques, reaction types, and parameters corresponding to these) which have been shown by experience to provide desired results (e.g., desired compromise between accuracy and speed) for varying types of analyses that most suit the particular user and the particular analyses commonly run by that user. Accordingly, the instrument gradually takes on the character of one that is specifically designed particular for that user, even though it retains the capability of accomodating itself to any user merely by redefining the saved methods.

CLAIMS

1. In an analytic instrument for measuring the concentration of a substance in a solution, the improvement comprising means defining and storing selected analytic methods for use in subsequent analyses, comprising:

    A.  means for defining a characterizing function relating the measured electric potential to the concentration of a substance in a solution,

    B.  means for defining each of a plurality of parameters associated with the characterizing function,

    C.  means for storing, as one of a designated number of methods, said function and said parameters for subsequent retrieval and use.

2. An analytic instrument according to claim 1 which includes means for altering pre-stored methods.

3. An analytic instrument for measuring the concentration of a substance in solution comprising:

    A.  an electrode for immersion in said solution for measuring a potential related to the concentration of said substance,

    B.  means for defining a Gran function relating the measured potential to the concentration of said substance, said means comprising

(1) means for selecting a reaction type from a group of predefined reaction types to thereby define a first Gran function factor,

(2) means responsive to the measured potential for defining a second Gran function factor; and

(3) means for forming a Gran function from said first and second function factors.

4. An analytic instrument for measuring the concentration of a substance in solution, comprising

    A. an electrode for immersion in said substance for measuring a potential proportional to the concentration of said substance,

    B. means for defining a Gran function relating the measured potential to the concentration of said substance, said means comprising

(1) means for selecting a reaction type from a group of predefined reaction types to thereby define an amplitude factor for said Gran function,

(2) means responsive to the measured potential for defining an exponent sign factor for said Gran function, and

(3) means for forming a Gran function from said amplitude and exponent sign factors.

5. An analytic instrument according to claim 4 in which the means for selecting an exponent sign factor comprises means for comparing successive values of the measured potential and selecting a sign factor

according to whether said potential is increasing or not.

FIG.1

FIG.2

0154323

| REACTION TYPE | DESCRIPTION | GRAN FUNCTION | |
|---|---|---|---|
| | | $G(V < V_E)$ | $G'(V > V_E)$ |
| 1 | STRONG ACID V. STRONG BASE | $(V_0+V) \cdot 10^{+E/S}$ | $(V_0+V) \cdot 10^{-E/S}$ |
| 2 | PRECIPITATION (ISOVALENT) | $(V_0+V) \cdot 10^{+E/S}$ | $(V_0+V) \cdot 10^{-E/S}$ |
| 3 | WEAK ACID V. STRONG BASE | $V \cdot 10^{+E/S}$ | $(V_0+V) \cdot 10^{-E/S}$ |
| 4 | WEAK BASE V. STRONG ACID | $V \cdot 10^{-E/S}$ | $(V_0+V) \cdot 10^{+E/S}$ |
| 5 | GRAN ADDITION | ----- | $(V_0+V) \cdot 10^{+E/S}$ |
| 6 | GRAN SUBTRACTION (1:1 COMPLEXATION) | $(V_0+V) \cdot 10^{+E/S}$ | ----- |
| 7 | REDOX V. REDUCING TITRANT | $V \cdot 10^{+E/S}$ | $10^{-E/S}$ |
| 8 | REDOX V. OXIDIZING TITRANT | $V \cdot 10^{-E/S}$ | $10^{+E/S}$ |

## FIG. 3

0154323

```
        ┌────────────────┐
        │     DEFINE     │
        │  GRAN FUNCTION │
        └───────┬────────┘
                │
        ┌───────┴────────┐
        │     k = -1     │──── 38
        └───────┬────────┘
                │
              ╱─┴─╲  36
            ╱       ╲          Y      ┌──────────┐
          ╱  Ei<=Ei-1 ╲────────────→  │  k = +1  │──── 40
            ╲       ╱                 └────┬─────┘
              ╲───╱                        │
                │ N ←───────────────────────┘
        ┌───────┴────────┐
        │  f1 = Vo + V   │
        │  f2 = Vo + V   │──── 42
        └───────┬────────┘
                │
              ╱─┴─╲  44
            ╱       ╲       N       ┌──────────┐
          ╱ REACTION  ╲──────────→  │  f1 = V  │──── 54
          ╲ TYPE 1,2,5,OR 6        └────┬─────┘
            ╲       ╱                    │
              ╲─┬─╱                    ╱─┴─╲  55
                │ Y        N         ╱       ╲
                │  ←───────────────╱ REACTION ╲
                │                  ╲ TYPE 7 OR 8
                │                    ╲       ╱
                │                      ╲─┬─╱  Y
                │                        │
                │                  ┌─────┴────┐
                │                  │  f2 = 1  │──── 56
                │                  └─────┬────┘
                │  ←──────────────────────┘
        ┌───────┴────────────────┐
        │ V<Ve: G = f1·10^k E/S  │
        │ V>Ve: G'= f2·10^-k E/S │──── 58
        └───────┬────────────────┘
                │
              ╱─┴─╲  46
            ╱       ╲    Y        ┌──────────┐ 48
          ╱ REACTION  ╲─────────→ │  G = G'  │
          ╲ TYPE 5 ?  ╱           │  G' = -  │
            ╲       ╱             └────┬─────┘
              ╲─┬─╱  N                 │
                │  ←────────────────────┘
              ╱─┴─╲  50
            ╱       ╲    Y        ┌──────────┐ 52
          ╱ REACTION  ╲─────────→ │  G' = G  │
          ╲ TYPE 6 ?  ╱           │  G = -   │
            ╲       ╱             └────┬─────┘
              ╲─┬─╱  N                 │
                │  ←────────────────────┘
             ╱─┴─╲
            ( END )
             ╲───╱
```

FIG. 4

FIG.5

FIG.6

0154323

FIG.7

0154323

FIG. 8